Europäisches Patentamt

(19) European Patent Office

Office européen des brevets

(11) Publication number: **0 113 542**
**A1**

## (12) EUROPEAN PATENT APPLICATION

(21) Application number: **83307413.1**

(22) Date of filing: **06.12.83**

(51) Int. Cl.³: **G 01 K 7/06**

(30) Priority: **13.12.82 GB 8235426**

(43) Date of publication of application:
**18.07.84 Bulletin 84/29**

(84) Designated Contracting States:
**BE DE FR IT NL**

(71) Applicant: **British Gas Corporation**
**Rivermill House 152 Grosvenor Road**
**London SW1V 3JL(GB)**

(72) Inventor: **Peet, Terence**
**133 Springwell Road**
**Heston Middlesex(GB)**

(72) Inventor: **Stevens, Reginald Leslie**
**20 Havelock Road**
**Dartford Kent(GB)**

(72) Inventor: **Ward, Frederick**
**9 Drumaline Ridge**
**Worcester Park Surry(GB)**

(74) Representative: **Morgan, David James**
**British Gas Corporation Patents Department 326 High**
**Holborn**
**London WC1V 7PT(GB)**

(54) **A thermocouple.**

(57) The present invention relates to a thermocouple of the type comprising a sheathed wire 1 in which the sheath 2 forms part of one conductor and the wire 1 the other conductor, the wire 1 and sheath 2 forming at one end a hot junction 11 but being otherwise electrically insulated from each other and of dissimilar metals where they form the hot junction 11.

A hermetic seal is formed at both the hot junction end of the thermocouple and at a point distant therefrom.

At the hot junction end, the seal comprises a weld bead 11 which closes off the sheath 2 and to which the wire 1 is joined.

The distant seal 110 comprises a ceramic or glass ceramic tube which fits over a bared portion 13 of the wire 1 and also within the annular gap between the wire 1 and the sheath 2. The tube is soldered to the wire 1 and the sheath 2.

A portion 112 of the wire 1 extends rearwardly through the seal 110 to form a trailing lead. A further wire 111 is soldered to a ferrite sleeve 7 of the sheath 2 to form the other part of the conductor and a further lead. The leads 111 and 112 therefore form a pair of flying leads which may be joined directly to a valve solenoid unit or to a plug.

The hermetic seals prevent ingress of air into the sheath 2 so preventing oxidation of the wire 1.

FIG.1.

FIG.2.

EP 0 113 542 A1

A Thermocouple

The present invention relates to a thermocouple of the type comprising a sheathed wire in which the sheath forms one conductor and the wire the other conductor, the wire and the sheath forming at one end a hot junction but being otherwise electrically insulated from each other and of dissimilar metals where they form the hot junction.

Thermocouples of the above type are conventionally used in gas boilers to provide a safety facility in the event that the ignition burner flame is extinguished during operation while gas is still being supplied to the burner.

The flame may be extinguished by a sudden draught or for any other reason and clearly in such an event, it is important for safety reasons to terminate the flow of gas to the burner as soon as possible.

In order to achieve this end, the thermocouple forms part of the electrical circuit controlling the solenoid valve which in turn controls the gas supply to the burner.

When the thermocouple is generating an emf, the signal so provided is sufficient to maintain the solenoid valve open and allow gas to flow. When the thermocouple is not generating an emf the valve is closed and gas flow to the burner ceases.

In order to generate the emf, the thermocouple is positioned in the boiler in such a way that its hot junction end is heated by the ignition burner flame. This sets up a temperature differential between the hot junction end and the cold junction and an emf is generated. The other end of the thermocouple is connected to the solenoid valve control circuit so that current flows in this circuit to maintain the valve open.

If the flame is extinguished for any reason, the hot junction end cools very quickly so reducing or removing the temperature differential and causing the emf to diminish or disappear.

When the emf has fallen sufficiently or has disappeared, the solenoid valve closes.

The major problem with the thermocouples of the type described above is that they tend to fail in service after a relatively short time. This is caused by the oxidation of the conductor wire to the hot junction end leading to the gradual diminution and eventual disappearance of the generated emf and inability to maintain the solenoid valve to open.

Such thermocouples must therefore be replaced at fairly frequent intervals and it is therefore an object of the present invention to provide a thermocouple of the type described and which has an extended service life to avoid such frequent replacement.

According therefore to the present invention, there is provided a thermocouple of the type comprising a sheathed wire in which the sheath forms one conductor and the wire the other conductor, the wire and the sheath forming at one end a hot junction but being otherwise electrically insulated from each other and of dissimilar metals where they form the junction, there being hermetic seals formed between the sheath and wire both at the hot junction end and at a point distant therefrom.

This arrangement effectively prevents or at worst significantly reduces the extent to which the portion of the wire at the hot junction end is subject to oxidation. This has been found to be the main reason for the failure of the thermocouples in service.

Before describing various embodiments of the invention, it will, it is believed, be helpful to describe in some detail a typical prior art thermocouple to set out the background to the invention.

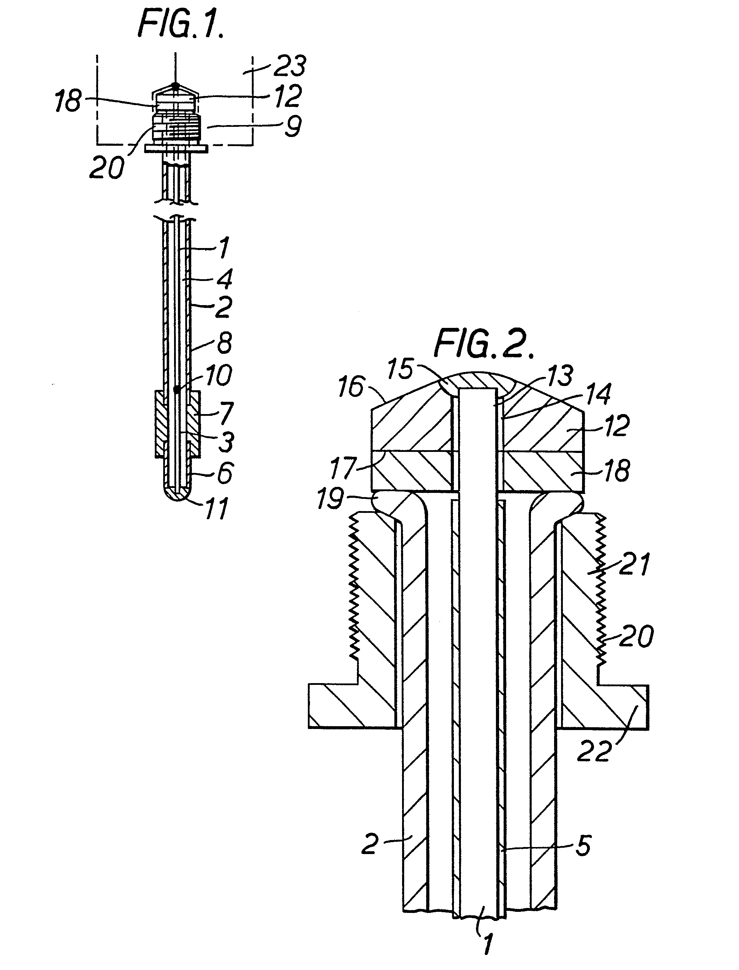

Figure 1 is a longitudinal view partly in section and partly broken away of a typical prior art thermocouple and Figure 2 is a magnified view of the terminal or cold end of the thermocouple in Figure 1 showing all the parts, except for the wire, in section.

Referring to Figure 1 the thermocouple comprises a central conductor wire 1 and a tubular sheath 2 for the wire 1.

The wire 1 comprises a hot junction forming end portion 3 of copper-nickel (eg. constantan) wire and a trailing end portion 4 of copper wire. Apart from two small lengths at either end of the wire 1 the entire length is protected by a layer of conventional insulating material designated 5 in Figure 2.

The sheath 2 comprises a hot junction forming end portion 6 of ferrite, an intermediate brass sleeve portion 7 of greater wall thickness and a trailing end portion 8 of copper of similar wall thickness to the ferrite portion 6. The portions 6 and 8 respectively fit into circumferential recesses on the internal surface of the brass portion 7 and are brazed thereto.

The trailing wire and sheath protions 5 and 8 respectively extend in the form of a relatively long coil (not shown) to terminate at the terminal end 9 of the thermocouple.

The copper-nickel wire portion 3 is brazed onto the copper wire portion 4 to form a cold junction 10.

The ferrite end portion 6 of the sheath 2 is sealed by means of autogenous fusion welding to which the bared end of the copper-nickel wire portion 3 is attached so that the sheath 2 and the wire 1 form a hot junction with the weld bead 11 formed on welding.

Referring to Figure 2, the wire 1 terminates at its cold end in a brass terminal button 12 to receive with clearance the bared end 13 of the wire 1 by way of a central bore 14, the wire end 13 projecting outwardly through the open end of the sheath 2. The bared end 13 of the wire 1 is attached to the button 12 by a solder bead 15.

The button 12 has an outermost surface 16 formed with a convexity to enable the thermocouple to be conected to the solenoid valve control circuit.

The button 12 has a flat innermost surface 17 which rests upon a flat annular washer 18 of an insulating material such as phenolic paper, glass fibre, asbestos or PTFE.

The washer 18 itself rests upon a seat 19 formed as a belled end on the sheath 2 and is received with clearance by the wire 1.

A gland nut 20 is slidably mounted with clearance on the sheath 2, the gland nut 20 having an externally threaded cylindrical sleeve 21 terminating inwardly in an annular flange 22.

Referring to Figure 1, in use, the thermocouple is attached to the solenoid valve control circuit by screw fitting the gland nut 20 into a suitably threaded socket provided in a control block 23 shown schematically in Figure 1. The socket terminates in a convex recess mating with the terminal button 12 of the thermocouple for the wire 1 whilst electrically insulated from the gland nut 20 providing a terminal for the sheath 2. Electrical contact is made when the button 12 is engaging the convex surface of the socket and the gland nut 20 when connected to the socket is engaging the belled seat 19 formed in the end of the sheath (as shown in Figure 2).

As mentioned earlier in the preamble, the thermocouple described above with reference to Figures 1 and 2 has a relatively short service life. This is due to the fact that the hot end portion 3 of the wire 1 tends to oxidise at a rapid rate when at operating temperature.

It has been discovered that this rapid oxidation takes place because there is a continuous ingress of air into the sheath.

This coupled with the fact that the temperature of the hot junction end of thermocouple is in service very high leads to rapid oxidation of the wire at or adjacent to the hot junction.

It has also been discovered that the air enters by way of very small channels formed between and through the washer 18 and the seat 19 formed at the cold end of the sheath 2. This admittedly small continuous supply of air is sufficient to cause rapid oxidation of the wire in service. The weld bead 11 however has been found to provide sealing of the hot end of the sheath so preventing ingress of air at its hot junction end in the short term.

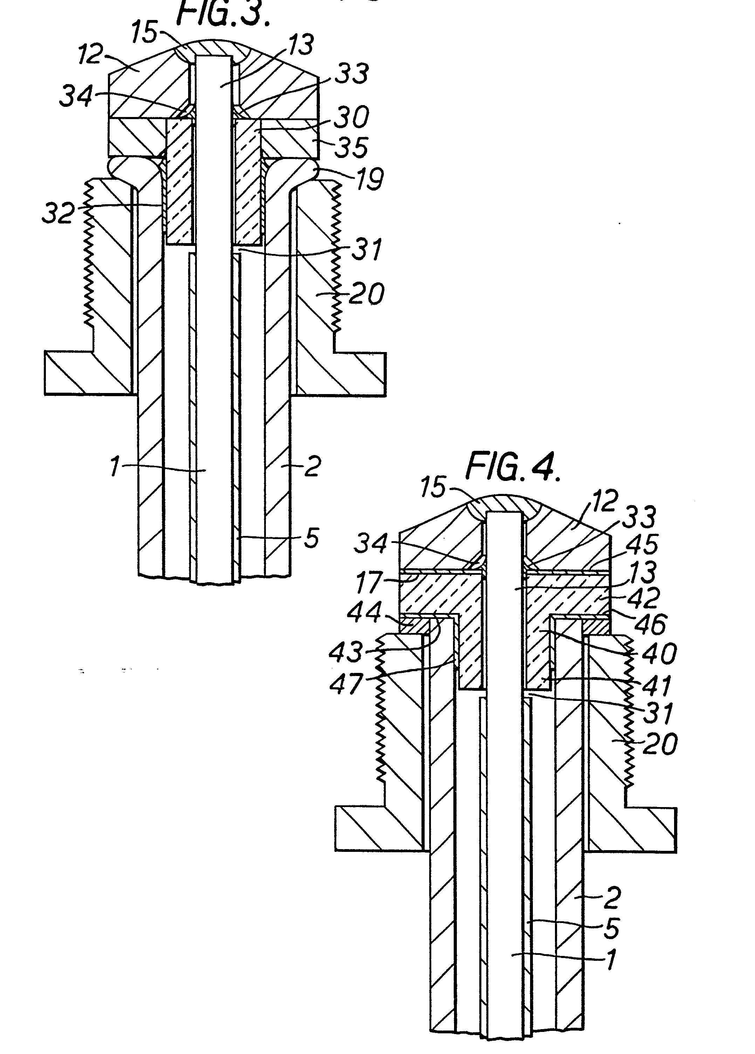

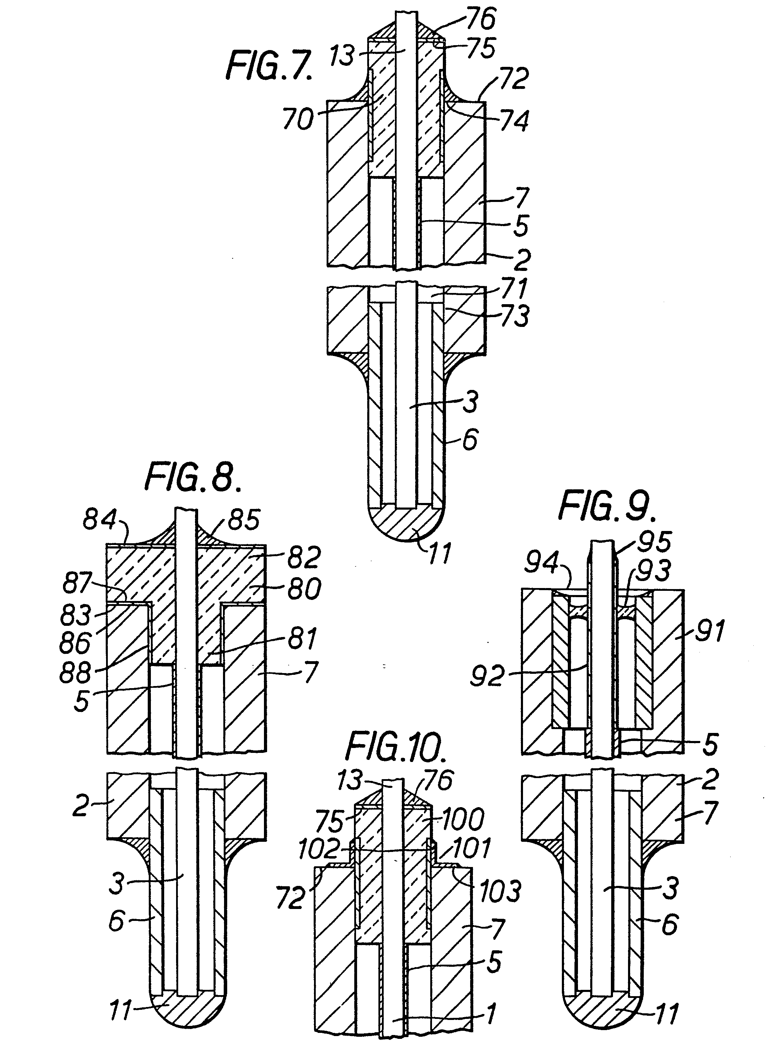

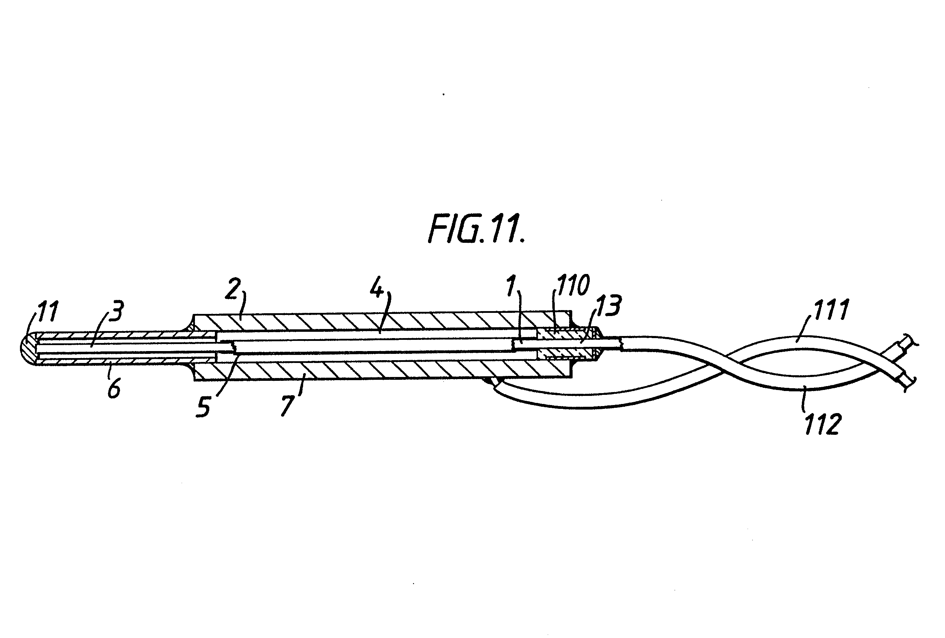

Embodiments of the invention will now be described with reference to the drawings in which Figures 3 to 6 are magnified sectional views of the terminal or cold end of a thermocouple similar to that shown in Figures 1 and 2, the drawings illustrating various examples of suitable cold end seals in accordance with the present invention, Figures 7 to 10 are magnified views in longitudinal section of modifications to the thermocouple hermetic seals in accordance with the present invention and Figure 11 is a schematic view in longitudinal section of a thermocouple having the shortened sheath shown in Figures 7 to 10.

In all the drawings parts identical to those shown in Figures 1 and 2 bear the same reference numerals.

Referring to Figures 3 to 6 apart from the modified cold ends, the remainder of each thermocouple is identical to that shown in Figure 1 and the relevant description applies.

Referring to Figure 3 the sealing element comprises a ceramic or glass ceramic tube 30 which fits over the bared end 13 of the wire 1 and also within the annular gap 31 between the wire 1 and the sheath 2.

The tube 30 is soldered as by a solder annulus 32 to the inner surface of the sheath 2 and by a solder annulus 33 to the wire 1 so as to form a hermetic sealing of the gap 31. The outer end face of the tube 30 and a portion of the external circumference of the tube 30 are metallised to provide solder compatible surfaces respectively for the solder annuli 33 and 32 before the solder is applied.

0113542

In order to clear the slight meniscus formed by the annulus 33 when the end face of the tube 30 is soldered to the wire 1, the brass terminal button 12 is formed with a countersunk recess 34 extending inwardly from is flat face 17, the meniscus in use being located within the recess 34.

An annular washer 35 of a high modulus or rigid electrically insulating material is interposed between the belled end 19 of the sheath 2 and the brass button 12. The annular washer 35 fits over the ceramic tube 30 as shown in Figure 3.

In all other respects, the cold end shown in Figure 3 is similar to that shown in Figure 2 and forms a similar electrical connection.

Referring to Figure 4, the sealing element comprises a flanged ceramic tube 40 having a tubular portion 41 which fits over the bare end 13 of the wire 1 and also within the annular gap 31 between the wire 1 and the sheath 2.

The flanged portion 42 of the tube 40 sits on the flat end 43 of the sheath 2 (in Figure 2 the end 19 is belled) and also upon an annular soft metal washer 44 of for example copper which fits over the sheath 2.

As shown in Figure 4, the tube 40 is soldered to the lower face 17 of the brass terminal button 12 and to the bare end 13 of the wire 1 by means of a disc 45 of solder applied to the upper flat surface of the flange 42. To this end the flat surface of the flange 42 is metallised for compatibility with the solder. In addition the lower surface of the flange 42 is soldered by a flat disc 46 of solder both to the flat end 43 of the sheath 2 and to the washer 44. The tubular portion 41 of the tube 40 is soldered to the inner surface of the sheath 2 by a ring 47 of solder which is integral with the solder disc 46 to form a hermetic seal of the gap 31. The lower surface of the flange 42 and the external surface of the tube 41 are consequently suitably metallised for solder compatibility.

In use, the gland nut 20 is caused to abut the washer 44 to establish electrical connection between the gland nut 20 and the sheath 2.

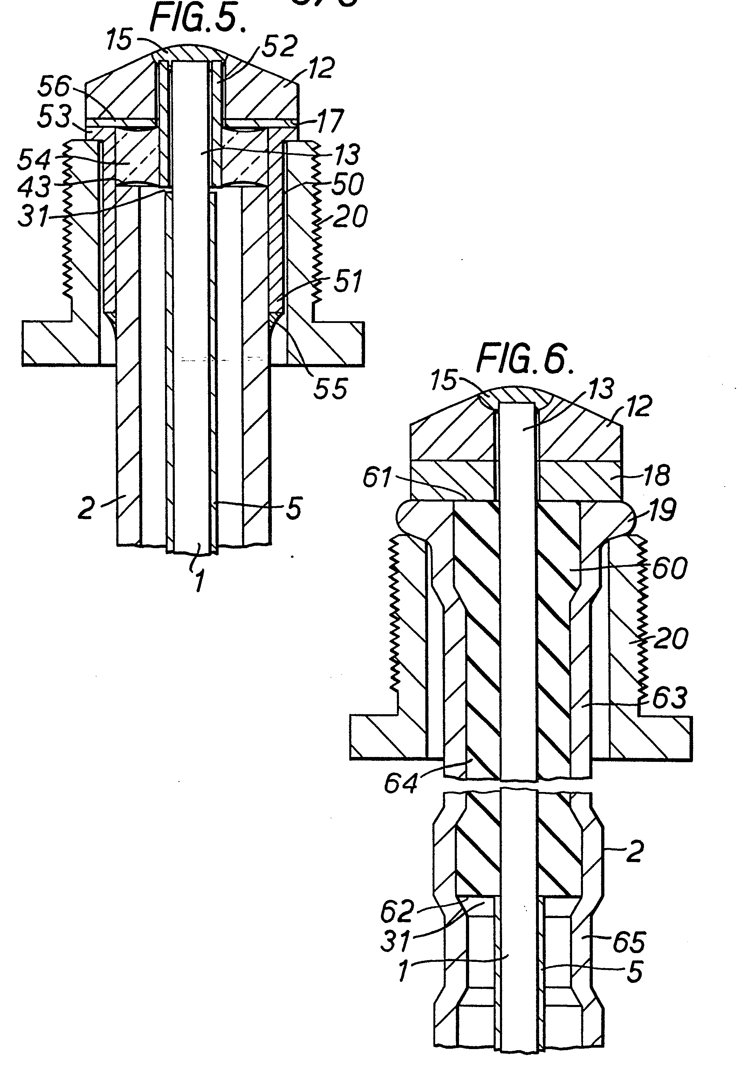

Referring to Figure 5, the sealing element comprises a glass to metal seal 50. The seal 50 has an outer metallic tubular portion 51 and concentric therewith an inner metallic tubular portion 52. The inner portion 52 projects upwardly above the upper end of outer portion 51 which is formed with an annular flange 53.

An annular ring 54 of glass is compression bonded to both of the tubes 51 and 52 to seal the annular gap between the tubes 51 and 52.

In use, the outer tube 51 is slidably fitted over the flat end of the sheath 2 and is capillary soldered thereto by the solder ring 55.

The inner tube 52 is fitted over the bare end 13 of the wire 1 in such a manner that a portion of the tube 51 extends into the central aperture of the brass button 12. The solder bead 15 completes the hermetic seal.

Interposed between the flange 53 of the tube 51 and the flat lower face 17 of the button 12 is an annular washer 56 of material similar to the washer 18 of Figure 2, the washer 56 fitting over the inner tube 52 and insulating the outer tube 51 from the button 12.

In use, the gland nut 20 is caused to abut the flange to establish electrical connection with the sheath 2.

Referring to Figure 6, the sealing element comprises a sleeve 60 of a compliant electrically insulating polymeric material for example fluorosilicone rubber. This sleeve 60 fits over the bare wire 13 to lie within the annular gap 31 between the wire 13 and the sheath 2 and to terminate at one end 61 at the belled end 19 of the sheath 2 and at the other end 62 flush with the insulation 5. A section 63 of the sheath 2 is swaged to reduce the external diameter of the sheath 2 so as to compress a portion of the sleeve 60 between the sheath 2 and the wire 13 to form a hermetic seal.

A further section 65 of the sheath 2 below the lower end 62 of the sleeve 60 is crimped to provide a seat for the lower end 62 of the sleeve 60.

The washer 18 seats on the upper ends of the sheath 2 and the sleeve 60 and in all other respects the cold end is similar in construction and use to that shown in Figure 2.

Referring to Figures 7 to 10 each of the thermocouples shown comprise a sheath 2 of greatly reduced length compared to that shown in Figure 1. Indeed only the ferrite end 6 and the brass sleeve 7 remain.

The sealing element shown in Figure 7 is similar to that shown in Figure 3 and comprises a ceramic tube 70 fitted over a bare portion 13 of the wire 1 and lying within the annular gap 71, between the brass sleeve 7 and the wire 1. The tube 70 partially protrudes above the upper end 72 of the sleeve 7.

The tube 70 is circumferentially brazed to the inner surface 73 of the sleeve 7 and to the upper end face 72 of the sleeve 7 by braze 74. To complete the hermetic seal the upper end face 75 of the tube 70 is brazed to the wire 13 by braze 76.

The end face 75 and a portion of the circumference of the tube 70 are metallised to provide solder compatibility.

Referring to Figure 8, the sealing element shown is similar to that shown in Figure 4 and comprises a flanged ceramic tube 80 having a tubular portion 81 which fits over the bared end 13 of the wire 1 and also within the annular gap 71 between the wire 1 and the sheath 2.

The flanged portion 82 of the tube 80 seats upon the upper end face 83 of the sleeve 7. To form an hermetic seal, the upper face 84 of the tube flange 82 is brazed by a braze ring 85 to the wire 1 while the lower face 86 of the flange 82 is brazed to the end face 83 of the sleeve 7 by a disc 87 of brazing/material and the tubular portion 81 is brazed circumferentially to the interior of the sheath 2 by a ring 88 of a brazing material.

The circumference of the tube 80 and the surfaces of the flange 82 are metallised for solder compatibility.

Referring to Figure 9, the sealing element shown is similar to that shown in Figure 5 and comprises a glass ceramic to metal seal 90. The seal 90 has an outer metallic tubular portion 91 and concentric therewith an inner metallic tubular poriton 92. The inner tubular portion 92 projects upwardly above the upper end of the outer portion 91 and an annular ring 93 of glass ceramic is compression bonded to both the tubes 91 and 92 to seal the annular gap between the tubes 91 and 92.

The outer tubular portion 91 is located within a circumferential recess in the inner surface of the sleeve 7 and is brazed thereto by a circumferential ring 94 of braze situated on the uppermost end of the tubular portion 91.

The inner tubular portion 92 fits closely over the bare wire 13 and is soldered thereto by a ring 95 of solder situated at the upper end of the portion 92 to complete the hermetic seal.

Referring to Figure 10 which shows only a broken away section of a thermocouple, the sealing element is similar to that shown in Figure 7 and comprises a ceramic tube 100 to the circumference of which is soldered an annular flange 101. The circumference of the tube 100 is metallised to permit one portion 102 of the flange 101 to be attached thereto while the other portion 103 of the flange 101 is brazed to the end face 72 of the brass sleeve 7. To complete the hermetic seal the metallised end-face 75 of the tube 100 is soldered by a solder ring 76 to the bare wire 13, the tube 100 first being fitted over the wire 13.

Referring to Figure 11, the thermocouple comprises a central conductor wire 1 and a generally tubular sheath 2 similar to those shown in any of Figures 7 to 10. Thus the sheath 2 shown sheaths only a front portion of the wire 1 and comprises merely the hot junction forming end portion of ferrite 6 and the brass sleeve portion 7, the trailing end portion of copper tube shown in Figure 1 and by inference in Figures 2 to 6 being dispensed with.

The wire 1 comprises the hot junction forming end 3 of copper nickel wire welded to the ferrite sleeve 6 by a weld bead 11 which also seals off the hot junction end of the sheath. The wire 1 also comprises a further trailing end portion 4 of copper wire.

The trailing wire portion 4 extends rearwardly through the cold end seal generally indicated by 110. This might be similar to any of the seals shown in Figures 7 to 10.

A further copper wire 111 is secured to the outer surface of the brass sleeve 7 of the sheath 2 adjacent to the seal 110.

The wire 111 is protected by a layer of conventional insulating material as is that portion 112 of the wire 1 extending rearwardly of the seal 110. The further portion 5 of the wire 1 lying within the sheath 2 is also insulated while the hot junction forming end portion 3 of the wire 1 is bare as is the portion 13 passing co-axially through the seal 110.

The portion 112 of the wire 1 external of the sheath 2 and the wire 111 form a pair of flying leads replacing a substantial portion of the conventional co-axial sheath wire arrangement shown in Figures 1 to 6. While not shown the ends of the leads 111 and 112 may either be joined directly to the solenoid valve or to a plug which is connectable to a valve unit socket. It will be appreciated that the cost of the thermocouple illustrated in Figure 11 is much less than that shown in Figures 1 to 6 due to the replacement of a substantial portion of the sheath by a wire lead. It is possible to replace any thing up to 95% of the sheath by the wire.

It will be appreciated that the portion of the wire conductor lying between the weld bead 11 and the seals in Figures 3 to 11 is hermetically sealed within the sheath 2. It is therefore protected from oxidation by ingress of air into the sheath 2.

CLAIMS

1.    A thermocouple comprising a sheathed central wire in which the sheath forms at least part of one conductor and the wire the other conductor, the wire and the sheath forming at one end a hot junction but being otherwise electrically insulated from each other and of dissimilar metals where they form the junction, there being hermetic seals formed between the sheath and wire both at the hot junction end and at a point distant therefrom.

2.    A thermocouple as claimed in Claim 1 in which the point lies adjacent to the other end of the thermocouple.

3.    A thermocouple as claimed in claim 1 or claim 2 in which the point lies adjacent to the other end of the sheath.

4.    A thermocouple as claimed in any of claims 1 to 3 in which the seal at the hot junction end of the sheath comprises a bead of weld metal which closes off the sheath and to which the wire is secured to form the hot junction.

5.    A thermocouple as claimed in any of the preceding claims which the seal at the point distant from the hot junction end includes an annular portion occupying the gap between the surface of the wire and the internal surface of the sheath and providing an air tight seal between the wire and the sheath.

16

0113542

6.    A thermocouple as claimed in any of the preceding claims in which the sheath length is only sufficient to sheath a portion of the central wire adjacent to the hot junction, the remainder of the central wire extending outwardly from the other end of the sheath by way of the hermetic seal formed at the point distant from the hot junction end, there being an outer wire secured to the sheath at a point rearwardly of the hot junction end to form another part of the one conductor.

7.    A thermocouple as claimed in claim 6 in which the outer wire is secured to the sheath at a point at or adjacent to the other end of the sheath.

8.    A thermocouple substantially as hereinbefore described with reference to any of Figures 3 to 11.

FIG.1.

FIG.2.

**FIG.3.**

**FIG.4.**

**FIG.5.**

15  52  12
56
53
17
54
43
31
13
50
20
51
2  5
55
1

**FIG.6.**

15  13  12
61
18
19
60
20
63
64
2
62
31
65
1  5

FIG.7.

FIG.8.

FIG.9.

FIG.10.

# FIG.11.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | GB-A-1 578 867 (NISSAN MOTOR COMPANY LIMITED) *Figures 1,2; page 2, line 12 - page 3, line 24* | 1,3,6 7 | G 01 K 7/06 |
| X | US-A-3 741 816 (WAGNER) *Figure 1; column 3, line 10 - column 4, line 53* | 1,2,4 | |
| X | GB-A- 775 969 (MILWAUKEE GAS SPECIALTY COMPANY) *Figure 2; page 2, line 3 - page 3, line 76; page 4, lines 34-100* | 1,2,3 5 | |
| E | EP-A-0 072 430 (MTU MOTOREN- UND TURBINEN-UNION MÜNCHEN GmbH) *Figure 1; page 5, line 32 - page 7, line 4* | 1,3,5 6,7 | TECHNICAL FIELDS SEARCHED (Int. Cl. ³) |
| A | US-A-3 556 864 (WAGNER) *Figures 2A,2B;3A-4D; column 5, line 42 - column 6, line 26* | 4 | G 01 K 7/00 |

The present search report has been drawn up for all claims

| Place of search THE HAGUE | Date of completion of the search 29-03-1984 | Examiner DRYSDALE N. |
|---|---|---|

EPO Form 1503. 03.82